# EUROPÄISCHE PATENTANMELDUNG

(11) **EP 2 045 478 A1**
(43) Veröffentlichungstag der Anmeldung: **08.04.2009**
(21) Anmeldenummer: 08017188.7
(22) Anmeldetag: 30.09.2008
(51) Int. Cl.: F16C 33/66

(54) **Lageranordnung zur drehbaren Lagerung eines Maschinenteils**

(30) Priorität: 02.10.2007 DE 202007013782 U
(71) Anmelder: Aktiebolaget SKF, 415 50 Göteborg (SE)
(72) Erfinder: Schweitzer, Ferdinand, 3352 St. Peter in der Au (AT); Lapczcuk, Alexander, 4400 Steyr (AT)
(74) Vertreter: Kohl, Thomas

(57) **Zusammenfassung**

Die Erfindung betrifft eine Lageranordnung zur drehbaren Lagerung eines Maschinenteils (1). Die erfindungsgemäße Lageranordnung weist ein Lager (3), einen gegen die Umgebung abgedichteten und wenigstens partiell mit einem Schmiermittel (15) gefüllten Innenraum (21) und ein Reservoir (17) zur Bevorratung eines Bestandteils (18) des Schmiermittels (15) auf, der sich im Laufe der Zeit aus dem Schmiermittel (15) abscheidet. Weiterhin weist die erfindungsgemäße Lageranordnung eine elektrische Fördereinrichtung (23) zum Fördern des bevorrateten Bestandteils (18) des Schmiermittels (15) aus dem Reservoir (17) auf, um das Schmiermittel (15) wenigstens teilweise zu regenerieren. Das Lager (3), das Reservoir (17) und die elektrische Fördereinrichtung (23) sind jeweils wenigstens zum Teil innerhalb eines Innenraums (21) der Lageranordnung angeordnet.

## Beschreibung

Die Erfindung betrifft eine Lageranordnung zur drehbaren Lagerung eines Maschinenteils.

Um einen ordnungsgemäßen Betrieb einer Lageranordnung zu ermöglichen, ist in der Regel eine Schmierung der in der Lageranordnung vorhandenen Lagerstellen erforderlich. Hierzu kann ein Schmiermittel beispielsweise dadurch bereitgestellt werden, dass die Lageranordnung gegen die Umgebung abgedichtet und in ihrem Innenraum mit einem anfänglichen Schmiermittelvorrat versehen wird. Nach einer gewissen Gebrauchsdauer der Lageranordnung kann dann von außen nachgeschmiert werden, um einen etwaigen Schmiermittelverlust auszugleichen. Anstelle eines Nachschmierens nach vorgegebenen Zeitintervallen, kann auch eine kontinuierliche Schmiermittelzufuhr erfolgen. Insbesondere kann die Schmiermittelzufuhr auch mittels einer in die Lageranordnung integrierten Schmiereinrichtung erfolgen.

So ist aus der EP 1 538 357 A1 eine Lagereinrichtung bekannt, bei der eine Schmiermittel-Versorgungseinheit zwischen gegenüberliegenden Laufbahnen der Lagereinrichtung angeordnet ist. Die Schmiermittel-Versorgungseinheit weist eine Pumpe zum Ausstoßen von Schmiermittel und einen Antrieb auf, welcher die Pumpe antreibt. Weiterhin weist die Schmiermittel-Versorgungseinheit einen Tank auf, der demontiert und dann aufgefüllt oder gegen einen gefüllten Tank ausgetauscht werden kann.

Der Erfindung liegt die **Aufgabe** zugrunde, eine Lageranordnung so auszubilden, dass sie vergleichsweise leicht montierbar ist und zudem auf eine externe Nachschmierung verzichtet werden kann.

Diese Aufgabe wird durch eine Lageranordnung mit der Merkmalskombination des Anspruchs 1 gelöst.

Die erfindungsgemäße Lageranordnung zur drehbaren Lagerung eines Maschinenteils weist ein Lager, einen gegen die Umgebung abgedichteten und wenigstens partiell mit einem Schmiermittel gefüllten Innenraum, ein Reservoir zur Bevorratung eines Bestandteils des Schmiermittels, der sich im Laufe der Zeit aus dem Schmiermittels abscheidet und eine elektrische Fördereinrichtung zum Fördern des bevorrateten Bestandteils des Schmiermittels aus dem Reservoir, um das Schmiermittel wenigstens teilweise zu regenerieren. Das Lager, das Reservoir und die elektrische Fördereinrichtung sind jeweils wenigstens zum Teil innerhalb des Innenraums angeordnet.

Die Erfindung hat den Vorteil, dass die Lageranordnung sehr kompakt ausgebildet und eine zuverlässige Schmierung des Lagers ohne externe Nachschmierung gewährleistet ist. Das Schmiermittel kann sehr genau dosiert werden, so dass nicht mit einem Schmiermittelüberschuss im Bereich des Lagers gearbeitet werden muss. Ein weiterer Vorteil besteht in der leichten Montierbarkeit der Lageranordnung.

Die Lageranordnung kann so ausgebildet sein, dass ein weiteres Lager wenigstens zum Teil innerhalb des Innenraums angeordnet ist. Dadurch ist eine sehr universelle Einsatzmöglichkeit der Lageranordnung gegeben. Weiterhin kann eine Stromquelle wenigstens zum Teil innerhalb des Innenraums angeordnet sein.

Dadurch kann die Lageranordnung autark ausgebildet werden, so dass keine externen Versorgungseinrichtungen erforderlich sind.

Die elektrische Fördereinrichtung kann an eine Steuereinrichtung angeschlossen sein. Dabei kann die Steuereinrichtung wenigstens zum Teil innerhalb des Innenraums angeordnet sein. Die Steuereinrichtung kann als Einrichtung zur zeitabhängigen Ansteuerung, insbesondere zu einer von der Betriebszeit der Lageranordnung abhängigen Ansteuerung, der elektrischen Fördereinrichtung ausgebildet sein. Dadurch kann eine Nachdosierung des bevorrateten Bestandteils des Schmiermittels mit einem relativ geringen Aufwand realisiert werden. Ebenso ist es auch möglich, dass die Steuereinrichtung als Einrichtung zur betriebszustandsabhängigen Ansteuerung der elektrischen Fördereinrichtung ausgebildet ist. Auf diese Weise ist eine sehr präzise und am tatsächlichen Bedarf orientierte Nachdosierung des bevorrateten Bestandteils des Schmiermittels möglich. Zudem kann die Steuereinrichtung als Einrichtung zum Ein- und Ausschalten und/oder zur Variation der Fördermenge der elektrischen Fördereinrichtung ausgebildet sein. Dies ermöglicht eine Variation der Nachdosierung über die Einschaltzeit oder über die Förderwirkung der elektrischen Fördereinrichtung.

An die Steuereinrichtung kann wenigstens ein Sensor zur Erfassung einer Betriebskenngröße der Lageranordnung angeschlossen sein. Der Sensor kann beispielsweise als ein Drehzahlsensor oder als ein Temperatursensor ausgebildet sein.

Das Lager und/oder das Reservoir und/oder die elektrische Fördereinrichtung und/oder die Steuereinrichtung und/oder die Stromquelle können vollständig im Innenraum angeordnet sein. Dadurch ergibt sich ein besonders kompakter und robuster Aufbau.

Das Lager und/oder das weitere Lager können einen äußeren Lagerring aufweisen und die elektrische Fördcreinrichtung und/oder das Reservoir und/oder die Steuereinrichtung und/oder die Stromquelle können vollständig radial innerhalb des Außendurchmessers des äußeren Lagerrings angeordnet sein. Dies hat den Vorteil, dass für diese Komponenten in Radialrichtung kein zusätzlicher Montageraum benötigt wird.

Das Reservoir und die elektrische Fördereinrichtung und/oder die Steuereinrichtung und/oder die Stromquelle können als integrale Bestandteile einer Schmiereinrichtung ausgebildet sein. Auf diese Weise kann die Zahl der losen Einzelteile bei der Montage reduziert und eine besonders leichte Montierbarkeit erreicht werden. Insbesondere kann die Schmiereinrichtung als ein Ringkörper ausgebildet sein.

Die elektrische Fördereinrichtung und/oder die Steuereinrichtung und/oder die Stromquelle können in einem ersten Umfangsabschnitt und das Reservoir in einem zweiten Umfangsabschnitt des Ringkörpers angeordnet sein. Diese Maßnahmen ermöglichen eine kompakte Ausführung der Schmicranordnung und eine platzsparende Montage. Weiterhin kann die Schmiereinrichtung zwischen dem Lager und dem weiteren Lager angeordnet sein.

Die elektrische Fördereinrichtung ist vorzugsweise für eine Förderung des bevorrateten Bestandteils des Schmiermittels vom Reservoir zum Lager und/oder zum weiteren Lager ausgelegt. Besonders vorteilhaft ist es, wenn eine Düse zur Schmiermittelzufuhr zum Lager und/oder eine weitere Düse zur Schmiermittelzufuhr zum weiteren Lager vorhanden sind. Dadurch ist eine sehr genaue Dosierung des Schmiermittels möglich.

Das Lager und/oder das weitere Lager können in Schwerkraftrichtung nach unten durch einen Dichtring abgedichtet sein. Dies hat den Vorteil, dass das Schmiermittel im Bereich der Lager verbleibt. Das Lager und/oder das weitere Lager können als Wälzlager ausgebildet sein. Insbesondere können das Lager und/oder das weitere Lager als Kugellager, beispielsweise als Schrägkugellager, ausgebildet sein.

Das Maschinenteil kann als eine Welle, insbesondere als eine Welle eines Separators, ausgebildet sein. Bevorzugt weist die Welle im Betriebszustand der Lageranordnung eine Orientierung auf, welche nicht mehr als 30° von der Vertikalen abweicht.

Das Schmiermittel kann ein Fett sein. Der Bestandteil des Schmiermittels kann ein Grundöl sein.

Die Erfindung wird nachstehend anhand der in der Zeichnung dargestellten Ausführungsbeispiele erläutert.

Es zeigen:
- Figur 1: ein Ausführungsbeispiel einer erfindungsgemäß ausgebildeten Lageranordnung in Schnittdarstellung,
- Figur 2: ein Ausführungsbeispiel für die Schmiereinrichtung in Schnittdarstellung und
- Figur 3: das in Figur 2 dargestellte Ausführungsbeispiel der Schmiereinrichtung in einer weiteren Schnittdarstellung.

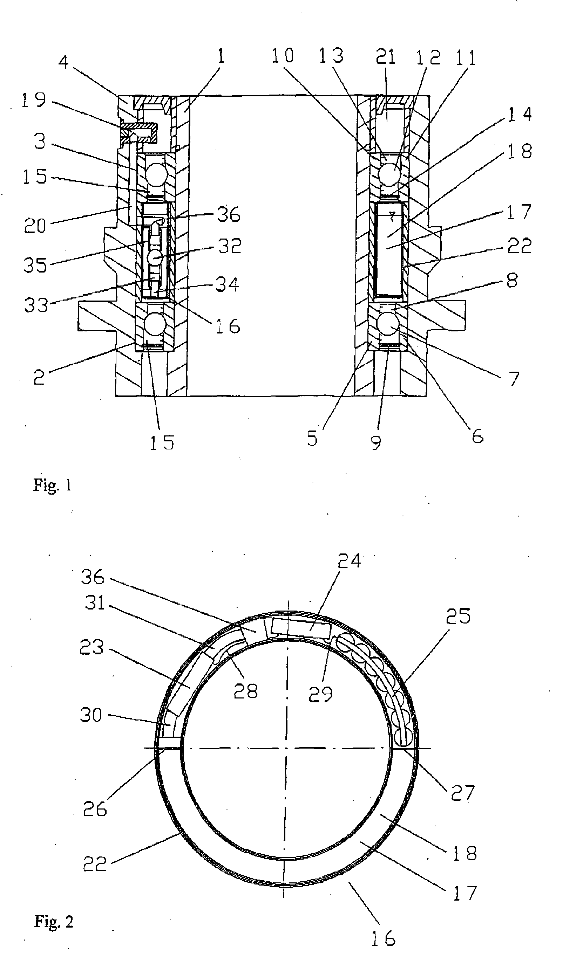

Figur 1 zeigt ein Ausführungsbeispiel einer erfindungsgemäß ausgebildeten Lageranordnung in Schnittdarstellung. Die dargestellte Lageranordnung kann beispielsweise bei einem Separator eingesetzt werden. Separatoren kommen insbesondere in der Lebensmittelindustrie zum Einsatz.

In Figur 1 ist eine vertikal, d. h. parallel zur Schwerkraftrichtung angeordnete Hohlwelle 1 dargestellt, die mittels zweier Lager 2, 3 drehbar in einem Gehäuse 4 gelagert wird. Die Lager 2, 3 sind als Schrägkugellager ausgebildet und räumlich übereinander angeordnet. Das in Figur 1 unten dargestellte Lager 2 wird im Folgenden als unteres Lager 2, das in Figur 1 oben dargestellte Lager 3 als oberes Lager 3 bezeichnet.

Das untere Lager 2 weist einen Innenring 5, einen Außenring 6, Wälzkörper 7, einen Käfig 8 und einen Dichtring 9 auf. Der Innenring 5 ist vorzugsweise drehfest auf der Hohlwelle 1 angeordnet. Der Außenring 6 ist vorzugsweise drehfest im Gehäuse 4 angeordnet. Die Wälzkörper 7 rollen auf dem Innenring 5 und auf dem Außenring 6 ab und werden dabei im Käfig 8 geführt. Der Dichtring 9 dichtet das untere Lager 2 in Schwerkraftrichtung nach unten ab. Nach oben ist das untere Lager 2 nicht abgedichtet.

Das obere Lager 3 weist einen Innenring 10, einen Außenring 11, Wälzkörper 12, einen Käfig 13 und einen Dichtring 14 auf, die in analoger Weise wie die entsprechenden Komponenten des unteren Lagers 2 angeordnet sind.

Das untere Lager 2 und das obere Lager 3 sind wenigstens partiell mit einem Schmierfett 15 gefüllt. Die Dichtringe 9 und 14 verhindern, dass das Schmierfett 15 aus den Lagern 2 und 3 austritt.

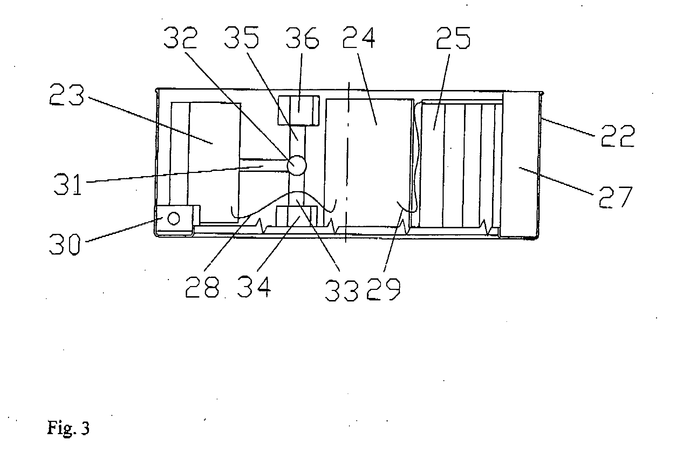

Axial zwischen dem unteren Lager 2 und dem oberen Lager 3 ist eine Schmiereinrichtung 16 angeordnet, die ein Reservoir 17 aufweist, das wenigstens teilweise mit einem Grundöl 18 gefüllt ist. Bei dem Grundöl 18 handelt es sich um einen Bestandteil des Schmierfetts 15, der sich im Laufe der Zeit aus dem Schmierfett 15 abscheidet. Das Schmierfett 15 ist pastös, das Grundöl 18 ist flüssig. Der Aufbau und die Funktionsweise der Schmiereinrichtung 16 werden im Folgenden noch näher erläutert, wobei auch auf die Figuren 2 und 3 Bezug genommen wird.

Oberhalb des oberen Lagers 3 ist eine obere Düse 19 angeordnet, die über einen Kanal 20 mit der Schmiereinrichtung 16 fluidisch verbunden ist.

Durch die vorstehend genannten Komponenten der Lageranordnung und einer Reihe von Ringkörpern, die ohne nähere Bezeichnung in der Figur 1 dargestellt sind, wird ein Innenraum 21 gebildet. Dabei sind die Komponenten der Lageranordnung so ausgebildet, dass ein Austritt des Schmierfetts 15 bzw. des Grundöls 18 aus dem Innenraum 21 in die Umgebung verhindert wird.

Figur 2 zeigt ein Ausführungsbeispiel für die Schmiereinrichtung 16 in Schnittdarstellung. Eine weitere Schnittdarstellung, bei der die Schnittebenen senkrecht zu der in Figur 2 gewählten Schnittebene verläuft, zeigt Figur 3.

Die Schmiereinrichtung 16 ist insgesamt ringförmig ausgebildet und weist eine Ummantelung 22, das Reservoir 17 zur Aufnahme von Grundöl 18, eine Mikropumpe 23 zur Förderung von Grundöl 18, ein Steuermodul 24 zur Ansteuerung der Mikropumpe 23 sowie eine Batterie 25 zur Stromversorgung der Mikropumpe 23 und des Steuermodul 24 auf. Die Ummantelung 22 kann beispielsweise durch einen Ringkörper mit U-förmigen Querschnitt ausgebildet sein und einen Ringraum einschließen. In Figur 3 ist die Ummantelung 22 teilweise entfernt, um den Blick auf das Innere der Schmiereinrichtung 16 freizugeben. Durch zwei Trennwände 26, 27 wird der Ringraum in Umfangsrichtung unterteilt und dadurch das Reservoir 17 ausgebildet.

Die Mikropumpe 23 wird elektrisch betrieben und ist über Kabel 28 mit dem Steuermodul 24 verbunden, das den Betrieb der Mikropumpe 23 steuert. Das Steuermodul 24 ist über Kabel 29 mit der Batterie 25 verbunden.

Die Mikropumpe 23 ist auf ihrer Saugseite über ein Verbindungsstück 30, das in eine Durchbrechung in der Trennwand 26 mündet, fluidisch mit dem Reservoir 17 verbunden. Auf ihrer Druckseite ist die Mikropumpe 23 über ein Verbindungsstück 31 fluidisch mit einem T-Stück 32 verbunden. An das T-Stück 32 ist über ein Verbindungsstück 33 eine untere Düse 34 und über ein Verbindungsstück 35 ein Umlenkstück 36 angeschlossen. Aus Figur 1 ist ersichtlich, dass die untere Düse 34 derart oberhalb des unteren Lagers 2 angeordnet ist, dass Ihre Öffnung zum unteren Lager 2 hin zeigt. Weiterhin geht aus Figur 1 hervor, dass das Umlenkstück 36 in den Kanal 20 mündet, an den wiederum die obere Düse 19 angeschlossen ist. Dies bedeutet, dass die Druckseite der Mikropumpe 23 sowohl mit der oberen Düse 19 als auch mit der unteren Düse 34 fluidisch verbunden ist und die Mikropumpe 23 somit Grundöl 18 aus dem Reservoir 17 zum oberen Lager 3 und zum unteren Lager 2 fördern kann.

Im Betriebszustand der Lageranordnung, d. h. wenn sich die Hohlwelle 1 relativ zum Gehäuse 4 dreht, wird der Mikropumpe 23 vom Steuermodul 24 über die Kabel 28 Strom zugeführt. Durch die Stromzufuhr wird die Mikropumpe 23 in Betrieb genommen und fordert Grundöl 18 aus dem Reservoir 17 zur oberen Düse 19 und zur unteren Düse 34. Das aus der oberen Düse 19 austretende Grundöl 18 gelangt zum Schmierfett 15 im Bereich des oberen Lagers 3. Das aus der unteren Düse 34 austretende Grundöl 18 gelangt zum Schmierfett 15 im Bereich des unteren Lagers 2. Durch das hinzudosierte Grundöl 18 wird ein im Laufe der Zeit auftretende Grundölverlust des Schmierfetts 15 im Bereich des oberen Lagers 3 und des unteren Lagers 2 ausgeglichen und das Schmierfett 15 dadurch regeneriert.

Da eine nennenswerte Abscheidung von Grundöl 18 aus dem Schmierfett 15 erst im Laufe der Zeit auftritt, kann das Steuermodul 24 so ausgebildet sein, dass es mit der Nachdosierung von Grundöl 18 durch eine Ansteuerung der Mikropumpe 23 erst nach einer vorgegebenen Zeitspanne, insbesondere nach einer vorgegebenen Betriebszeit der Lageranordnung beginnt. Hierfür kann die Lageranordnung einen nichtfigürlich dargestellten Sensor zur Ermittlung des Betriebszustands aufweisen, der an das Steuermodul 24 angeschlossen ist. Bei diesem Sensor kann es sich beispielsweise um einen Drehzahlsensor handeln. Da die Grundölabscheidung auch von den Betriebsbedingungen abhängt, kann die Nachdosierung auch von den Betriebsbedingungen abhängig gemacht werden. Die Betriebsbedingungen können mittels Sensoren erfasst werden, beispielsweise mittels eines Drehzahlsensors, mittels eines Temperatursensors usw., die am Steuermodul 24 angeschlossen sind. Der Temperatursensor kann beispielsweise die Temperatur der Innenringc 5, 10, der Außenringe 6, 11 oder des Schmierfetts 15 erfassen. Die Temperaturwerte können auch dazu verwendet werden, die Lagervorspannung oder die Lebensdauer des Schmierfetts 15 zu ermitteln und zu überwachen.

Die Nachdosierung von Grundöl 18 erfolgt vorzugsweise nicht kontinuierlich, sondern es wird in gewissen Zeitabständen, insbesondere in bestimmten Abständen an Betriebszeit, eine gewisse Menge an Grundöl 18 nachdosiert. Die Zeitabstände und/oder die Menge an nachdosierten Grundöl 18 können dabei von den Betriebsbedingungen der Lageranordnung abhängen. Dabei ist es auch möglich, dem oberen Lager 3 und dem unteren Lager 2 unterschiedliche Mengen an Grundöl 18 zuzuführen. Dies kann beispielsweise durch eine unterschiedliche Dimensionierung der oberen Düse 19 und der unteren Düse 34 erreicht werden. Bei der Nachdosierung des Grundöls kann das Steuermodul 24 die pro Zeiteinheit zugeführte Menge an Grundöl 18 oder die Zeitspanne der Zuführung über eine entsprechende Ansteuerung der Mikropumpe 23 variieren.

Die anfängliche Fettschmicrung und das Reservoir 17 sind vorzugsweise so bemessen, dass über die gesamte Lebensdauer der Lageranordnung eine ausreichende Schmierung gewährleistet ist.

Die Lageranordnung kann auch so abgewandelt werden, dass die Orientierung der Hohlwelle 1 von einer Ausrichtung parallel zur Vertikalen abweicht. Vorzugsweise beträgt die Abweichung jedoch nicht mehr als 30°. Weiterhin kann die Lageranordnung zusätzlich zum unteren Lager 2 und zum oberen Lager 3 ein oder mehrere weitere Lager aufweisen, die ebenfalls in die Nachdosierung von Grundöl 18 einbezogen werden.

### Bezugszeichenliste

- 1: Hohlwelle
- 2: unteres Lager
- 3: oberes Lager
- 4: Gehäuse
- 5: Innenring
- 6: Außenring
- 7: Wälzkörper
- 8: Käfig
- 9: Dichtring
- 10: Innenring
- 11: Außenring
- 12: Wälzkörper
- 13: Käfig
- 14: Dichtring
- 15: Schmierfett
- 16: Schmiereinrichtung
- 17: Reservoir
- 18: Grundöl
- 19: obere Düse
- 20: Kanal
- 21: Innenraum
- 22: Ummantelung
- 23: Mikropumpe
- 24: Steuermodul
- 25: Batterie
- 26: Trennwand
- 27: Trennwand
- 28: Kabel
- 29: Kabel
- 30: Verbindungsstück
- 31: Verbindungsstück
- 32: T-Stück
- 33: Verbindungsstück
- 34: untere Düse
- 35: Verbindungsstück
- 36: Umlenkstück

## Patentansprüche

1. Lageranordnung zur drehbaren Lagerung eines Maschinenteils (1), mit
- einem Lager (3),
- einem gegen die Umgebung abgedichteten und wenigstens partiell mit einem Schmiermittel (15) gefüllten Innenraum (21),
- einem Reservoir (17) zur Bevorratung eines Bestandteils (18) des Schmiermittels (15), der sich im Laufe der Zeit aus dem Schmiermittel (15) abscheidet und
- einer elektrischen Fördereinrichtung (23) zum Fördern des bevorrateten Bestandteils (18) des Schmiermittels (15) aus dem Reservoir (17), um das Schmiermittel (15) wenigstens teilweise zu regenerieren,
wobei
- das Lager (3), das Reservoir (17) und die elektrische Fördereinrichtung (23) jeweils wenigstens zum Teil innerhalb des Innenraums (21) angeordnet sind.

2. Lageranordnung nach Anspruch 1, **dadurch gekennzeichnet, dass** ein weiteres Lager (2) wenigstens zum Teil innerhalb des Innenraums (21) angeordnet ist.

3. Lageranordnung nach einem der vorhergehenden Ansprüche, **dadurch gekennzeichnet, dass** eine Stromquelle (25) wenigstens zum Teil innerhalb des Innenraums (21) angeordnet ist.

4. Lageranordnung nach einem der vorhergehenden Ansprüche, **dadurch gekennzeichnet, dass** die elektrische Fördereinrichtung (23) an eine Steuereinrichtung (24) angeschlossen ist.

5. Lageranordnung nach Anspruch 4, **dadurch gekennzeichnet, dass** die Steuereinrichtung (24) wenigstens zum Teil innerhalb des Innenraums (21) angeordnet ist.

6. Lageranordnung nach einem der Anspruch 4 oder 5, **dadurch gekennzeichnet, dass** an die Steuereinrichtung (24) wenigstens ein Sensor zur Erfassung einer Betriebskenngröße der Lageranordnung angeschlossen ist.

7. Lageranordnung nach einem der vorhergehenden Ansprüche, **dadurch gekennzeichnet, dass** das Lager (3) und/oder das Reservoir (17) und/oder die elektrische Fördereinrichtung (23) und/oder die Steuereinrichtung (24) und/oder die Stromquelle (25) vollständig im Innenraum (21) angeordnet sind.

8. Lageranordnung nach einem der vorhergehenden Ansprüche, **dadurch gekennzeichnet, dass** das Lager (3) und/oder das weitere Lager (2) einen äußeren Lagerring (11, 6) aufweisen und die elektrische Fördereinrichtung (23) und/oder das Reservoir (17) und/oder die Steuereinrichtung (24) und/oder die Stromquelle (25) vollständig radial innerhalb des Außendurchmessers des äußeren Lagerrings (11,6) angeordnet sind.

9. Lageranordnung nach einem der vorhergehenden Ansprüche, **dadurch gekennzeichnet, dass** das Reservoir (17) und die elektrische Fördereinrichtung (23) und/oder die Steuereinrichtung (24) und/oder die Stromquelle (25) als integrale Bestandteile einer Schmiereinrichtung (16) ausgebildet sind.

10. Lageranordnung nach Anspruch 9, **dadurch gekennzeichnet, dass** die Schmiereinrichtung (16) als ein Ringkörper ausgebildet ist.

11. Lageranordnung nach Anspruch 10, **dadurch gekennzeichnet, dass** die elektrische Fördereinrichtung (23) und/oder die Steuereinrichtung (24) und/oder die Stromquelle (25) in einem ersten Umfangsabschnitt und das Reservoir (17) in einem zweiten Umfangsabschnitt des Ringkörpers angeordnet sind.

12. Lageranordnung nach einem der Ansprüche 9 bis 11, **dadurch gekennzeichnet, dass** die Schmicreinrichtung (16) zwischen dem Lager (3) und dem weiteren Lager (2) angeordnet ist.

13. Lageranordnung nach einem der vorhergehenden Ansprüche, **dadurch gekennzeichnet, dass** die elektrische Fördereinrichtung (23) für eine Förderung des bevorrateten Bestandteils (18) des Schmiermittels (15) vom Reservoir (17) zum Lager (3) und/oder zum weiteren Lager (2) ausgelegt ist.

14. Lageranordnung nach einem der vorhergehenden Ansprüche, **dadurch gekennzeichnet, dass** eine Düse (19) zur Schmiermittelzufuhr zum Lager (3) und/oder eine weitere Düse (34) zur Schmiermittelzufuhr zum weiteren Lager (2) vorhanden sind.

15. Lageranordnung nach einem der vorhergehenden Ansprüche, **dadurch gekennzeichnet, dass** das Lager (3) und/oder das weitere Lager (2) in Schwerkraftrichtung nach unten durch einen Dichtring (14, 9) abgedichtet sind.
